# EUROPEAN PATENT SPECIFICATION

(11) **EP 3 573 206 B1**
(45) Date of publication and mention of the grant of the patent: **06.03.2024**
(21) Application number: 18741073.3
(22) Date of filing: 09.01.2018
(51) Int. Cl.: H02G 7/05, H01R 4/48, H02G 3/32, F16L 3/10

(54) **SELF-LOCKING CABLE FASTENING HOLDER**
SELBSTVERRIEGELNDER KABELBEFESTIGUNGSHALTER
SUPPORT DE FIXATION DE CÂBLE AUTO-VERROUILLANT

(30) Priority: 21.01.2017 CN 201710043667
(43) Date of publication of application: 27.11.2019
(73) Proprietor: Guangzhou Panyu Cable Group Co., Ltd., Guangzhou, Guangdong 511442 (CN)
(72) Inventor: HU, Chaoqiang, Guangzhou Guangdong 511442 (CN); YOU, Zhanshan, Guangzhou Guangdong 511442 (CN); SUN, Jianji, Guangzhou Guangdong 511442 (CN); TAN, Dan, Guangzhou Guangdong 511442 (CN); CHEN, Xueer, Guangzhou Guangdong 511442 (CN); LU, Guangye, Guangzhou Guangdong 511442 (CN); ZHANG, Kaituo, Guangzhou Guangdong 511442 (CN); WANG, Yanfa, Guangzhou Guangdong 511442 (CN); ZHANG, Sihuan, Guangzhou Guangdong 511442 (CN); HAO, Yan, Guangzhou Guangdong 511442 (CN); SHAO, Yuanpeng, Guangzhou Guangdong 511442 (CN); CHEN, Xueli, Guangzhou Guangdong 511442 (CN)
(74) Representative: Becker Kurig & Partner Patentanwälte mbB
(86) International application number: PCT/CN2018/071840
(87) International publication number: WO 2018/133696

(56) References cited:
- CN-A- 105 240 620
- CN-A- 106 300 217
- CN-A- 106 300 217
- CN-A- 106 848 621
- CN-U- 203 445 269
- CN-U- 206 727 601
- US-A1- 2012 097 443

## Description

### BACKGROUND OF THE INVENTION

### 1. Field of the Invention

The present invention relates to a field of electric power tools, and specifically, to a self-locking cable fastening holder.

### 2. Description of Related Art

In today's society, electrical safety and ensuring safe and stable operation of a power grid are very important. A cable is disposed on a telegraph pole or a building using a winder insulator on a cable fixing device. A cable end is generally fixed in such a way of twining the cable end around the winder insulator on the cable fixing device and bending the cable end, and bundling or fixing a bent cable end in a tightened state. Currently, an operator usually bends a cable end in a conventional manner such as using manpower or a simple tool, and bundles and fixes the bent cable end with a cable tie. Due to a relatively large diameter of the cable, it is difficult for a worker working aloft to bend and tighten the cable using manpower or a simple tool. A cable tie is generally a metal wire made of aluminum, and the cable tie being tightened on the cable results in reduced insulation of the cable, which is likely to cause damage to an outer insulative layer of the cable. In addition, there is no uniform standard for a bundling method with great randomness. Consequently, the cable end cannot be bundled firmly, and the cable end is likely to become loosened and falls off from the cable fixing device, posing a potential safety hazard.

A conventional fixing manner for the cable end is improved in the prior art, in which the cable end is fixed using a cable holder. However, these cable holders are generally connected through mating between bolts and nuts. Therefore, it is time-consuming and labor-intensive for a single person working at heights.

CN 105 240 620 A discloses a single-layer cable fixing clamp. The single-layer cable fixing clamp comprises an upper clamp and a lower clamp; a lower cable slot is formed in the center of the upper end surface of the lower clamp; an upper cable slot matched with the lower cable slot is formed in the bottom surface of the upper clamp; a left insertion hole and a right insertion hole are formed in the upper end surface of the lower clamp; a left insertion post and a right insertion post are arranged on the lower end surface of the upper clamp; a left horizontal position clamping hole and a right horizontal position clamping hole are separately formed in two symmetrical side surfaces of the lower clamp.

CN 106 300 217 A discloses a cable termination fastening wire clamp, including male folder and female folder, male folder and female folder are separate, the first folder is provided with the a crimping, the female folder is provided with a second crimping corresponding to the first crimping, the first crimping and the second crimping can coordinate clamping cable, and the male folder and female folder are additionally provided with can be by tight so that they are matched for clamping tightly the locking device of cable to male folder and female clamp lock.

### SUMMARY OF THE INVENTION

In order to overcome disadvantages of the prior art, the present invention provides a self-locking cable fastening holder that is easy to operate and that is capable of locking and fixing a bent cable end quickly. A held cable is stable and not prone to become loosened.

The present invention is implemented using following technical solutions.

A self-locking cable fastening holder includes a U-shaped male holder and a female holder, and the U-shaped male holder and the female holder are independent from each other. A first cable holding part is arranged at a bent portion of the U-shaped male holder, a corresponding second cable holding part is arranged at a front surface of the female holder, and the first cable holding part and the second cable holding part cooperate to hold a cable. Locking rods are arranged at two sides of the U-shaped male holder, and locking holes correspond to the locking rods being respectively arranged at two sides of the second cable holding part on the female holder. Each of the locking holes has an inlet at the front surface of the female holder and an outlet opposite to the inlet. Each of the locking rods has a plurality of non-return ring teeth. A movable locking block is arranged at a side edge of the locking hole. At least one locking thread that fits the non-return ring teeth is arranged at one end of the locking block facing the outlet, and the other end of the locking block abuts against a locking spring. When the locking rod is inserted from the inlet of the locking hole, the locking spring pushes the locking block to enable the locking thread of the locking block to abut against the non-return ring teeth of the locking rod, such that the locking rod is limited to move only forward without moving in an inverse direction.

Further, the improvement solutions are as follows.

Preferably, a groove is arranged at the first end of the locking block, the groove is arc-shaped and fits the locking rod, and the locking thread is formed in the groove.

According to the present invention, two locking blocks in the two locking holes of the female holder are oppositely disposed at two ends of the locking spring.

Preferably, a locking groove is arranged at a back surface of the female holder, a cover plate being arranged at an opening of the locking groove, the two locking blocks and the locking spring being placed in the locking groove, and the locking block moving under guidance of the cover plate and a bottom portion of the locking groove.

Preferably, the two locking blocks are connected using the two locking springs. A pin for connecting the cover plate and the bottom portion of the locking groove is disposed between the two locking blocks and between the two locking springs, and a groove corresponding to the pin is disposed on each of the two locking blocks.

Preferably, the second cable holding part is a concave arc insulating structure.

Preferably, a structure of the U-shaped male holder includes a male inner frame body made of metal material and a male outer frame body made of plastic or rubber material and covering a periphery of the first cable holding part. A structure of the female holder includes a female inner frame body made of metal material and a female outer frame body made of plastic or rubber material.

Preferably, a protective cover for protecting the locking rod of the U-shaped male holder is further arranged on the female holder. The protective cover is detachably connected to the female holder.

Preferably, the protective cover is detachably connected to the female holder in such a way that the protective cover is connected to the female holder using a buckle. The buckle includes clamping hooks arranged at two sides of an inner surface of the protective cover and slots correspondingly arranged at two sides of an outer surface of the female holder, such that the protective cover and the female holder are detachably connected through cooperation of the hooks and the slots.

The present invention has the following beneficial effects. The non-return ring teeth on the locking rod of the U-shaped male holder and the locking thread on the locking block in the locking hole of the female holder cooperate with the locking spring to form a non-return self-locking mechanism. The U-shaped male holder can move only forward instead of moving backward in the female holder. During operation, the U-shaped male holder is directly inserted into the female holder to be automatically locked, and is not prone to become loosened. When the U-shaped male holder needs to be detached, only the locking spring needs to be pressed back to enable the locking block to retract, and the U-shaped male holder can be freely taken out from the female holder. The self-locking cable fastening holder is very convenient to operate, is convenient to use, and is particularly suitable for construction of high-altitude wiring.
In order to make the aforementioned and other objectives and advantages of the present invention comprehensible, embodiments accompanied with figures are described in detail below.

### BRIEF DESCRIPTION OF THE DRAWINGS

FIG. 1 is a schematic structural diagram of a self-locking cable fastening holder according to an embodiment.
FIG. 2 is a schematic diagram of a breakdown structure of a self-locking cable fastening holder according to the embodiment.
FIG. 3 is a schematic structural diagram of a self-locking cable fastening holder from another perspective according to the embodiment.

### DESCRIPTION OF THE EMBODIMENTS

A self-locking cable fastening holder in the present invention is further described with reference to the accompanying drawings.

The directional terms mentioned in the present invention, like "above", "below", "front", "back", "left", and "right", refer to the directions in the appended drawings. Therefore, the directional terms are only used for illustration instead of limiting the present invention.

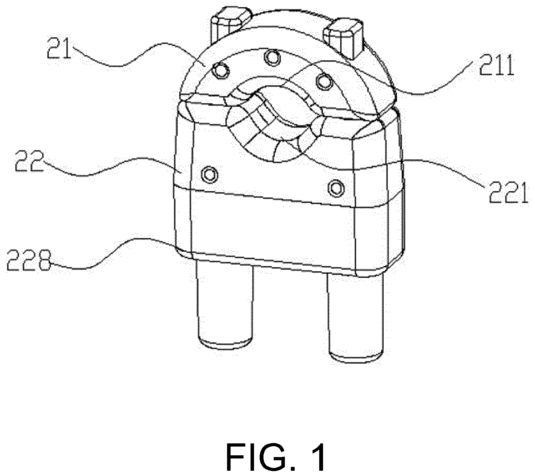

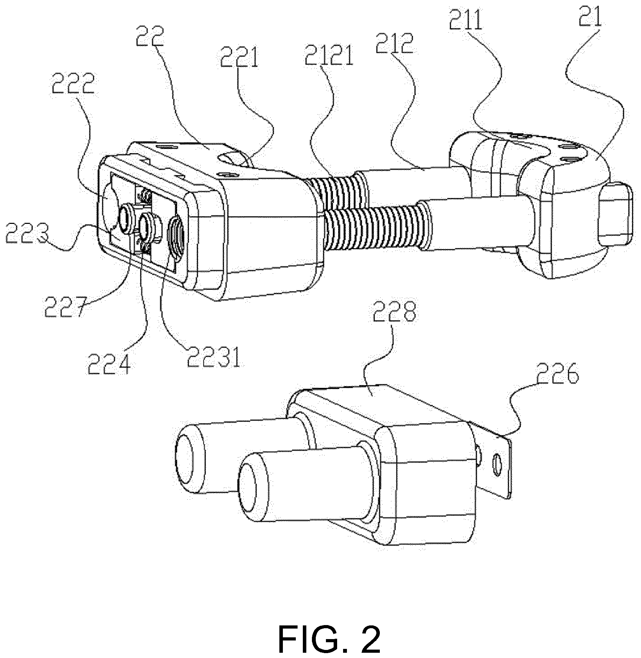

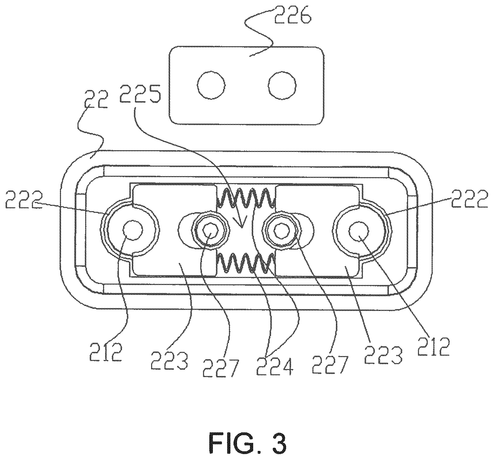

As shown in FIG. 1 to FIG. 3, a self-locking cable fastening holder includes a U-shaped male holder 21 and a female holder 22, and the U-shaped male holder 21 and the female holder 22 are independent from each other. A first cable holding part 211 is arranged at a bent portion of the U-shaped male holder 21, a corresponding second cable holding part 221 is arranged at a front surface of the female holder 22. The first cable holding part 211 and the second cable holding part 221 cooperate to hold a cable. Locking rods 212 are arranged at two sides of the U-shaped male holder 21. Locking holes 222 corresponding to the locking rods 212 are respectively arranged at two sides of the second cable holding part 221 on the female holder 22. A plurality of non-return ring teeth 2121 arranged in succession and inclined toward roots of the locking rods 212 are arranged on the locking rods 212. A movable locking block 223 is arranged at a side edge of the locking hole 222. At least one locking thread 2231 inclined toward an outlet of the locking hole 222 and fitting the non-return ring teeth 2121 is arranged at one end of the locking block 223, and the other end of the locking block 223 abuts against a locking spring 224, so that the locking spring 224 pushes the locking block 223 to enable the locking thread 2231 of the locking block 223 to abut against the non-return ring teeth 2121 of the locking rod 212. When the locking rod 212 is inserted from an inlet of the locking hole 222, such that the locking rod 212 is limited to move only forward without moving in an inverse direction. Via the non-return ring teeth 2121 on the locking rod 212 of the U-shaped male holder 21 and the locking thread 2231 on the locking block 223 in the locking hole 222 of the female holder 22, and via cooperation of the locking spring 224, a non-return self-locking mechanism is formed. The U-shaped male holder 21 can move only forward without moving backward in the female holder 22. During operation, the U-shaped male holder 21 is directly inserted into the female holder 22 to be automatically locked, and is not prone to become loosened. When the U-shaped male holder needs to be detached, only the locking spring 224 needs to be pressed back to enable the locking block 223 to retract, and the U-shaped male holder 21 can be freely taken out from the female holder 22. The self-locking cable fastening holder is very convenient to operate, is convenient to use, and is particularly suitable for construction of high-altitude wiring.

In a preferred implementation, an arc groove fitting the locking rod 212 is arranged at the end of the locking block 223. The locking thread 2231 is an arc thread disposed on the arc groove. In the structure, the locking block 223 holds an outer surface of the locking rod 212 tightly, so that there is a larger contact area between the arc thread and the non-return ring teeth 2121 to achieve a more stable non-return effect.

In a preferred implementation, two locking blocks 223 in the two locking holes 222 of the female holder 22 are oppositely disposed at two ends of the locking spring 224. The structure is compact and reasonable, so that limited space on the female holder 22 is effectively utilized.

In a preferred implementation, a locking groove is arranged at a back surface of the female holder 22. A cover plate 226 is arranged at an opening of the locking groove. The two locking blocks 223 and the locking spring 224 are placed in the locking groove, and the locking block 223 is moved under guidance of the cover plate 226 and a bottom portion of the locking groove. In the structure, reciprocating movement of the locking block 223 is smoother and steadier, and it is convenient to press back the locking spring 224 when the cable holder needs to be detached.

In a preferred implementation, the two locking blocks 223 are connected by using two locking springs 224. Two pins 227 for connecting the cover plate 226 and the bottom portion of the locking groove is disposed between each of the two locking blocks 223 and a corresponding one of the two locking springs 224. A groove corresponding to one of the pins 227 is disposed on each of the two locking blocks 223. The structure is compact and reasonable, so that limited space on the female holder 22 is effectively utilized.

In a preferred implementation, the second cable holding part 221 is a concave arc insulating structure or a concave bent insulating structure, and the second cable holding part 221 cooperates with the first cable holding part 211 to increase a contact area with an outer surface of a cable, thereby increasing stability of holding the cable by the U-shaped male holder 21 and the female holder 22.

In a preferred implementation, a structure of the U-shaped male holder 21 includes a male inner frame body made of metal material and a male outer frame body made of plastic or rubber material and covering a periphery of the first cable holding part 211. A structure of the female holder 22 includes a female inner frame body made of metal material and a female outer frame body made of plastic or rubber material. The structure meets requirements for rigidity of the cable holder, stability and insulation of cable holding, and protection of the outer surface of the cable.

In a preferred implementation, a protective cover 228 for protecting the locking rod 212 of the U-shaped male holder 21 is further arranged on the female holder 22. The protective cover 228 is detachably connected to the female holder 22. The structure helps protect the locking rod 212 of the U-shaped male holder 21 the non-return self-locking structure.

In a preferred implementation, the protective cover 228 is detachably connected to the female holder 22 in such a way that the protective cover 228 is connected to the female holder 22 using a buckle. The buckle including hooks arranged at two sides of an inner surface of the protective cover 228 and slots correspondingly arranged at two sides of an outer surface of the female holder 22, such that the protective cover 228 and the female holder 22 are detachably connected through cooperation of the clamping hooks and the slots.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive.

## Claims

1. A self-locking cable fastening holder, comprising: a U-shaped male holder (21) and a female holder (22), the U-shaped male holder (21) and the female holder (22) being independent from each other, a first cable holding part (211) being arranged at a bent portion of the U-shaped male holder (21), a corresponding second cable holding part (221) being arranged at a front surface of the female holder (22), and the first cable holding part (211) and the second cable holding part (221) cooperating to hold a cable, locking rods (212) being arranged at two sides of the U-shaped male holder (21), and locking holes (222) corresponding to the locking rods (212) being respectively arranged at two sides of the second cable holding part (221) on the female holder (22), each of the locking holes (222) having an inlet at a front surface of the female holder (22) and an outlet opposite to the inlet, and each of the locking rods (212) having a plurality of non-return ring teeth (2121) that are arranged in succession and inclined toward a root of each of the locking rods (212), a movable locking block (223) being arranged at a side edge of the locking hole (222), at least one locking thread (2231) that fits the non-return ring teeth (2121) being arranged at one end of the locking block (223) facing the outlet, and the other end of the locking block (223) abutting against a locking spring (224), when the locking rod (212) is inserted from the inlet of the locking hole (222), the locking spring (224) pushes the locking block (223) to enable the locking thread (2231) of the locking block (223) to abut against the non-return ring teeth (2121) of the locking rod (212), such that the locking rod (212) is limited to move only forward without moving in an inverse direction, wherein two locking blocks (223) in the two locking holes (222) of the female holder (22) are oppositely disposed at two ends of the locking spring (224).

2. The self-locking cable fastening holder according to claim 1, **characterized in that** a groove is arranged at the end of the locking block (223), the groove is arc-shaped and fits the locking rod (212), and the locking thread (2231) is formed in the groove.

3. The self-locking cable fastening holder according to claim 2, **characterized in that** a locking groove is arranged at a back surface of the female holder (22), a cover plate (226) being arranged at an opening of the locking groove, the two locking blocks (223) and the locking spring (224) being placed in the locking groove, and the locking block (223) moving under guidance of the cover plate (226) and a bottom portion of the locking groove.

4. The self-locking cable fastening holder according to claim 3, **characterized in that** the two locking blocks (223) are connected using the two locking springs (224), two pins (227) for connecting the cover plate (226) and the bottom portion of the locking groove (226) are disposed between the two locking blocks (223) and between the two locking springs (224), and a groove corresponding to one of the pins (227) is disposed on each of the two locking blocks (223).

5. The self-locking cable fastening holder according to any of claims 1 to 4, **characterized in that** the second cable holding part (221) is a concave arc insulating structure.

6. The self-locking cable fastening holder according to any of claims 1 to 4, **characterized in that** a structure of the U-shaped male holder (21) comprises a male inner frame body made of metal material and a male outer frame body made of plastic or rubber material and covering a periphery of the first cable holding part (211), and a structure of the female holder (22) comprises a female inner frame body made of metal material and a female outer frame body made of plastic or rubber material.

7. The self-locking cable fastening holder according to any of claims 1 to 4, **characterized in that** a protective cover (228) for protecting the locking rod (212) of the U-shaped male holder (21) is further arranged on the female holder (22), the protective cover (228) being detachably connected to the female holder (22).

8. The self-locking cable fastening holder according to claim 7, **characterized in that** the protective cover (228) is detachably connected to the female holder (22) in such a way that the protective cover (228) is connected to the female holder (22) using a buckle, the buckle includes clamping hooks arranged at two sides of an inner surface of the protective cover (228) and slots correspondingly arranged at two sides of an outer surface of the female holder (22), such that the protective cover (228) and the female holder (22) are detachably connected through cooperation of the clamping hooks and the slots.

## Patentansprüche

1. Selbstverriegelnder Kabelbefestigungshalter, umfassend: einen U-förmigen männlichen Halter (21) und einen weiblichen Halter (22), wobei der U-förmige männliche Halter (21) und der weibliche Halter (22) unabhängig voneinander sind, ein erstes Kabelhalteteil (211), das an einem gebogenen Abschnitt des U-förmigen männlichen Halters (21) angeordnet ist, ein entsprechendes zweites Kabelhalteteil (221), das an einer vorderen Fläche des weiblichen Halters (22) angeordnet ist, und das erste Kabelhalteteil (211) und das zweite Kabelhalteteil (221) zusammenwirken, um ein Kabel zu halten, Verriegelungsstangen (212) an zwei Seiten des U-förmigen männlichen Halters (21) angeordnet sind, und Verriegelungslöcher (222), die den Verriegelungsstangen (212) entsprechen, jeweils an zwei Seiten des zweiten Kabelhalteteils (221) an dem weiblichen Halter (22) angeordnet sind, wobei jedes der Verriegelungslöcher (222) einen Einlass an einer vorderen Fläche des weiblichen Halters (22) und einen Auslass gegenüber dem Einlass aufweist, und jede der Verriegelungsstangen (212) eine Vielzahl von Rückschlagringzähnen (2121) aufweist, die hintereinander angeordnet und in Richtung einer Wurzel jeder der Verriegelungsstangen (212) geneigt sind, wobei ein beweglicher Verriegelungsblock (223) an einem Seitenrand des Verriegelungslochs (222) angeordnet ist, wobei wenigstens ein Verriegelungsgewinde (2231), das zu den Rückschlagringzähnen (2121) passt, an einem Ende des Verriegelungsblocks (223) angeordnet ist, das dem Auslass zugewandt ist, und das andere Ende des Verriegelungsblocks (223) an eine Verriegelungsfeder (224) anstößt, wenn die Verriegelungsstange (212) von dem Einlass des Verriegelungslochs (222) aus eingeführt wird, die Verriegelungsfeder (224) den Verriegelungsblock (223) drückt, um zu ermöglichen, dass das Verriegelungsgewinde (2231) des Verriegelungsblocks (223) an die Rückschlagringzähne (2121) der Verriegelungsstange (212) anstößt, so dass die Verriegelungsstange (212) beschränkt ist, sich nur vorwärts zu bewegen, ohne sich in einer umgekehrten Richtung zu bewegen,
wobei zwei Verriegelungsblöcke (223) in den zwei Verriegelungslöchern (222) des weiblichen Halters (22) an zwei Enden der Verriegelungsfeder (224) einander gegenüberliegend angeordnet sind.

2. Selbstverriegelnder Kabelbefestigungshalter gemäß Anspruch 1, **dadurch gekennzeichnet, dass** an dem Ende des Verriegelungsblocks (223) eine Nut angeordnet ist, wobei die Nut bogenförmig ist und zu der Verriegelungsstange (212) passt, und das Verriegelungsgewinde (2231) in der Nut ausgebildet ist.

3. Selbstverriegelnder Kabelbefestigungshalter gemäß Anspruch 2, **dadurch gekennzeichnet, dass** eine Verriegelungsnut an einer Rückfläche des weiblichen Halters (22) angeordnet ist, wobei eine Abdeckplatte (226) an einer Öffnung der Verriegelungsnut angeordnet ist, die beiden Verriegelungsblöcke (223) und die Verriegelungsfeder (224) in der Verriegelungsnut angeordnet sind und der Verriegelungsblock (223) sich unter Führung der Abdeckplatte (226) und eines Bodenabschnitts der Verriegelungsnut bewegt.

4. Selbstverriegelnder Kabelbefestigungshalter gemäß Anspruch 3, **dadurch gekennzeichnet, dass** die beiden Verriegelungsblöcke (223) unter Verwendung der beiden Verriegelungsfedern (224) verbunden sind, zwei Stifte (227) zum Verbinden der Abdeckplatte (226) und des Bodenabschnitts der Verriegelungsnut zwischen den beiden Verriegelungsblöcken (223) und zwischen den beiden Verriegelungsfedern (224) angeordnet sind, und eine Nut, die einem der Stifte (227) entspricht, an jedem der beiden Verriegelungsblöcke (223) angeordnet ist.

5. Selbstverriegelnder Kabelbefestigungshalter gemäß einem der Ansprüche 1 bis 4, **dadurch gekennzeichnet, dass** das zweite Kabelhalteteil (221) eine konkave bogenförmige Isolierstruktur ist.

6. Selbstverriegelnder Kabelbefestigungshalter gemäß einem der Ansprüche 1 bis 4, **dadurch gekennzeichnet, dass** eine Struktur des U-förmigen männlichen Halters (21) einen männlichen inneren Rahmenkörper aus Metallmaterial und einen männlichen äußeren Rahmenkörper aus Kunststoff- oder Gummimaterial umfasst und einen Umfang des ersten Kabelhalteteils (211) abdeckt, und dass eine Struktur des weiblichen Halters (22) einen weiblichen inneren Rahmenkörper aus Metallmaterial und einen weiblichen äußeren Rahmenkörper aus Kunststoff- oder Gummimaterial umfasst.

7. Selbstverriegelnder Kabelbefestigungshalter gemäß einem der Ansprüche 1 bis 4, **dadurch gekennzeichnet, dass** eine Schutzabdeckung (228) zum Schützen der Verriegelungsstange (212) des U-förmigen männlichen Halters (21) ferner an dem weiblichen Halter (22) angeordnet ist, wobei die Schutzabdeckung (228) lösbar mit dem weiblichen Halter (22) verbunden ist.

8. Selbstverriegelnder Kabelbefestigungshalter gemäß Anspruch 7, **dadurch gekennzeichnet, dass** die Schutzabdeckung (228) mit dem weiblichen Halter (22) in solch einer Weise lösbar verbunden ist, dass die Schutzabdeckung (228) mit dem weiblichen Halter (22) unter Verwendung einer Schnalle verbunden ist, wobei die Schnalle Klemmhaken enthält, die an zwei Seiten einer Innenfläche der Schutzabdeckung (228) angeordnet sind, und Schlitze, die entsprechend an zwei Seiten einer Außenfläche des weiblichen Halters (22) angeordnet sind, so dass die Schutzabdeckung (228) und der weibliche Halter (22) durch Zusammenwirken der Klemmhaken und der Schlitze lösbar verbunden sind.

## Revendications

1. Support de câble de fixation auto-verrouillant, comprenant : un support mâle en forme de U (21) et un support femelle (22), le support mâle en forme de U (21) et le support femelle (22) étant indépendants l'un de l'autre, une première partie de maintien de câble (211) étant disposée au niveau d'une partie incurvée du support mâle en forme de U (21), une deuxième partie de maintien de câble correspondante (221) étant disposée au niveau d'une surface avant du support femelle (22) et la première partie de maintien de câble (211) et la deuxième partie de maintien de câble (221) coopérant pour maintenir un câble, des tiges de verrouillage (212) étant disposées des deux côtés du support mâle en forme de U (21) et des trous de verrouillage (222) correspondant aux tiges de verrouillage (212) étant respectivement disposées des deux côtés de la deuxième partie de maintien de câble (221) sur le support femelle (22), chacun des trous de verrouillage (222) comportant une entrée au niveau d'une surface avant du support femelle (22) et une sortie opposée à l'entrée et chacune des tiges de verrouillage (212) comportant une pluralité de dents de bague de non-retour (2121) qui sont disposées les unes à la suite des autres et inclinées vers une racine de chacune des tiges de verrouillage (212), un bloc de verrouillage mobile (223) étant disposé au niveau d'un côté latéral du trou de verrouillage (222), au moins un filetage de verrouillage (2231) qui s'ajuste aux dents de bague de non-retour (2121) étant disposé à une extrémité du bloc de verrouillage (223) faisant face à la sortie et l'autre extrémité du bloc de verrouillage (223) butant contre un ressort de verrouillage (224), lorsque la tige de verrouillage (212) est insérée à partir de l'entrée du trou de verrouillage (222), le ressort de verrouillage (224) pousse le bloc de verrouillage (223) pour permettre au filetage de verrouillage (2231) du bloc de verrouillage (223) de buter contre les dents de bague de non-retour (2121) de la tige de verrouillage (212), de sorte que la tige de verrouillage (212) soit limitée pour se déplacer uniquement vers l'avant sans se déplacer dans une direction inverse, dans lequel deux blocs de verrouillage (223) dans les deux trous de verrouillage (222) du support femelle (22) sont disposés à l'opposés aux deux extrémités du ressort de verrouillage (224).

2. Support de fixation de câble auto-verrouillant selon la revendication 1, **caractérisé en ce que** une rainure est disposée à l'extrémité du bloc de verrouillage (223), la rainure est de forme arquée et s'ajuste à la tige de verrouillage (212) et le filetage de verrouillage (2231) est formée dans la rainure.

3. Support de fixation de câble auto-verrouillant selon la revendication 2, **caractérisé en ce que** une rainure de verrouillage est disposée au niveau d'une surface arrière du support femelle (22), une plaque de couvercle (226) étant disposée au niveau d'une ouverture de la rainure de verrouillage, les deux blocs de verrouillage (223) et le ressort de verrouillage (224) étant placés dans la rainure de verrouillage et le bloc de verrouillage (223) se déplaçant sous la supervision de la plaque de couvercle (226) et d'une partie de base de la rainure de verrouillage.

4. Support de fixation de câble auto-verrouillant selon la revendication 3, **caractérisé en ce que** les deux blocs de verrouillage (223) sont raccordés en utilisant les deux ressorts de verrouillage (224), deux goupilles (227) pour raccorder la plaque de couvercle (226) et la partie de base de la rainure de verrouillage sont disposés entre les deux blocs de verrouillage (223) et entre les deux ressorts de verrouillage (224) et une rainure correspondant à une des goupilles (227) est disposée sur chacun des deux blocs de verrouillage (223).

5. Support de fixation de câble auto-verrouillant selon une quelconque des revendications 1 à 4, **caractérisé en ce que** la deuxième partie de maintien de câble (221) est une structure d'isolation en arc concave.

6. Support de fixation de câble auto-verrouillant selon une quelconque des revendications 1 à 4, **caractérisé en ce que** une structure du support mâle en forme de U (21) comprend un corps de cadre intérieur male constituée d'un matériau métallique et un corps de cadre extérieur mâle constitué de matière plastique ou caoutchouc et recouvrant une périphérie de la première partie de maintien de câble (211) et une structure du support femelle (22) comprend un corps de cadre intérieur femelle constitué d'un matériau métallique et un corps de cadre extérieur femelle constitué de matière plastique ou caoutchouc.

7. Support de fixation de câble auto-verrouillant selon une quelconque des revendications 1 à 4, **caractérisé en ce que** un couvercle protecteur (228) pour protéger la tige de verrouillage (212) du support mâle en forme de U (21) est en outre disposé sur le support femelle (22), le couvercle protecteur (228) étant raccordé de manière amovible au support femelle (22).

8. Support de fixation de câble auto-verrouillant selon la revendication 7, **caractérisé en ce que** le couvercles protecteur (228) est fixé de manière amovible au support femelle (22) d'une manière telle que le couvercle protecteur (228) soit raccordé au support femelle (22) en utilisant une boucle, la boucle comprend des crochets de serrage disposés des deux côtés d'une surface intérieure du couvercle protecteur (228) et des fentes disposées de manière correspondante des deux côtés d'une surface extérieure du support femelle (22), de sorte que le couvercle protecteur (228) et le support femelle (22) soient raccordés de manière amovible via la coopération des crochets de serrage et des fentes.
